Europäisches Patentamt

European Patent Office

Office européen des brevets

(11) Veröffentlichungsnummer: **0 332 861**
**B1**

# EUROPÄISCHE PATENTSCHRIFT

(45) Veröffentlichungstag der Patentschrift:
12.09.90

(51) Int. Cl.⁵: **B60K 5/04**, B60K 5/12

(21) Anmeldenummer: 89102577.7

(22) Anmeldetag: 15.02.89

(54) **Lagerung für eine Motor-Getriebeeinheit.**

(30) Priorität: 16.03.88 DE 3808762

(43) Veröffentlichungstag der Anmeldung:
20.09.89 Patentblatt 89/38

(45) Bekanntmachung des Hinweises auf die Patenterteilung:
12.09.90 Patentblatt 90/37

(84) Benannte Vertragsstaaten:
DE ES FR GB IT SE

(56) Entgegenhaltungen:
DE-A- 3 402 100
FR-A- 2 453 746
GB-A- 2 126 546
US-A- 2 034 764
US-A- 3 825 090

PATENT ABSTRATCS OF JAPAN, Band 8, Nr. 47 (
M-280 ) 1484 , 2 März 1984; & JP-A-58 202 110 ( NISSAN
JIDOSHA K.K. ) 25-11-1983

(73) Patentinhaber: Dr.Ing.h.c. F. Porsche
Aktiengesellschaft, Porschestrasse 42,
D-7000 Stuttgart 40(DE)
Patentinhaber: AVTO-WAZ VOLGA AUTOMOBILE
ASSOCIATED WORKS, Kuibyschewskaja oblast,
445633 Togliatti(SU)

(72) Erfinder: Kosenkow, Waleri, Leninskij
prospekt, 3-104 Kuibyschewskaja obl. g.,
445051 Togliatti(SU)
Erfinder: Kuprijanow, Alexander, ul.
Shilina, 3a-48 Kuibyschewskaja obl. g.,
445023 Togliatti(SU)
Erfinder: Litwin, Grigorij, bulwar
Tupolewa, 13-406 Kuibyschewskaja obl. g.,
445040 Togliatti(SU)
Erfinder: Freyer, Hans, Karisruher Allee 9,
D-7500 Karlsruhe(DE)
Erfinder: Von Broock, Ulrich, Rohrweg 27,
D-3470 Höxter 1(DE)

(74) Vertreter: Haug, Dietmar et al, Patentanwälte Andrae,
Flach, Haug, Kneissl Steinstrasse 44,
D-8000 München 80(DE)

## Beschreibung

Die Erfindung bezieht sich auf eine Lagerung für eine Motor-Getriebeeinheit nach dem Oberbegriff des Anspruchs 1.

Aus der DE-OS 34 02 100 ist eine schwingungsisolierende Lageranordnung für ein querliegendes Fahrzeug- Antriebsaggregat mit einer Drehmomentabstützung bekannt, wobei es über drei Lager aufbauseitig gehalten und durch zwei Drehmomentstützen, die zu einer Seite des Aggregats angeordnet sind, abgestützt wird.

Aufgabe der Erfindung ist es, eine Lagerung für ein querliegend im Fahrzeug angeordnetes Antriebsaggregat zu schaffen, die eine optimierte Schwingungsisolierung zwischen Antriebsaggregat und Aufbau des Fahrzeugs gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Durch die spezielle Anordnung und Ausbildung eines Motor- und Getriebelagers und von Drehmomentstützen und deren Lager wird eine Aufhängung für ein quereingebautes Antriebsaggregat eines Fahrzeugs erzielt, durch das eine Funktionstrennung von Gewichtsaufnahme und Drehmomentabstützung und hieraus resultierend eine getrennte Abstimmbarkeit einzelner Eigenschwingungsfrequenzen möglich wird. Insbesondere weist eine derartige Aufhängung im wesentlichen folgende Vorteile auf:
- Ein guter Fahrkomfort durch vorteilhafte getrennte Abstimmöglichkeit für ein Motorstuckern und Lastwechselreaktionen;
- Eine Abkopplung eines Leerlaufzitterns durch eine weiche Federkennung der Drehmomentstützlager bei relativ kleinen Schwingwegen;
- Ein geringes Innengeräusch durch geringe dynamische Steifigkeiten der beiden Traglager (Motor- und Getriebelager).

Das Motor- und Getriebelager sind so angeordnet und gezielt abgestimmt, daß sich negativ auf den Fahrkomfort auswirkende Einflüsse, wie z. B. Lastwechselstöße und Starrkörperschwingungen durch Straßenunebenheiten minimiert werden. Hierzu sind die Lager relativ nahe einer durch den Schwerpunkt verlaufenden Horizontalebene angeordnet, wodurch auftretende Schwingungsformen wirksam entkoppelt werden können. Außerdem führt der relativ große Abstand der Lager zueinander zu vorteilhaften hohen Eigenfrequenzen der Starrkörperdrehungen.

Die Positionierung des Motor- und Getriebelagers etwa in Höhe einer durch den Schwerpunkt gelegten Ebene ergibt eine vorteilhafte Aufhängung des Aggregats am Fahrzeugaufbau, derart, daß die beiden Lager - das eine an der Motorstirnseite und das weitere etwa an der Getriebestirnseite - eine sogenannte Pendellagerung ergeben, wobei diese beiden Lager dann im wesentlichen nur noch das Aggregatgewicht tragen, während die Drehmomentstützen dann nur noch die Reaktionskräfte der Antriebsmomente aufnehmen, die im wesentlichen in vertikaler Richtung wirken. Eine Isolation eines Leerlaufzitterns erfolgt durch in horizontaler Richtung entsprechend ausgebildete Lager der Drehmomentstützen. Durch die getrennte Aufnahme der einzelnen auftretenden Belastungen der Einheit im Betrieb wird es möglich, die Steifigkeiten des Motor- und Getriebelagers in Quer- Längs- und Hochrichtung definiert für je eine Aufgabe auszulegen.

Die motorseitige Abstützung der oberen Drehmomentstütze erfolgt über einen Tragarm, der mit einem Zylinderkopfdeckel lösbar verbunden ist, wodurch für die obere Drehmomentstütze ein Lagerort erzielt wird, der mit großer Basis zur unteren Drehmomentstütze liegt.

Ein Ausführungsbeispiel der Erfindung ist in der Zeichnung dargestellt und wird im folgenden näher beschrieben.

Es zeigen:

Fig. 1 eine Rückansicht einer schematisch dargestellten Motor-Getriebeeinheit mit Lagern und Drehmomentstützen,

Fig. 2 eine Draufsicht auf die Einheit gemäß Fig. 1,

Fig. 3 eine Ansicht in Pfeilrichtung Z gemäß Fig. 1 gesehen,

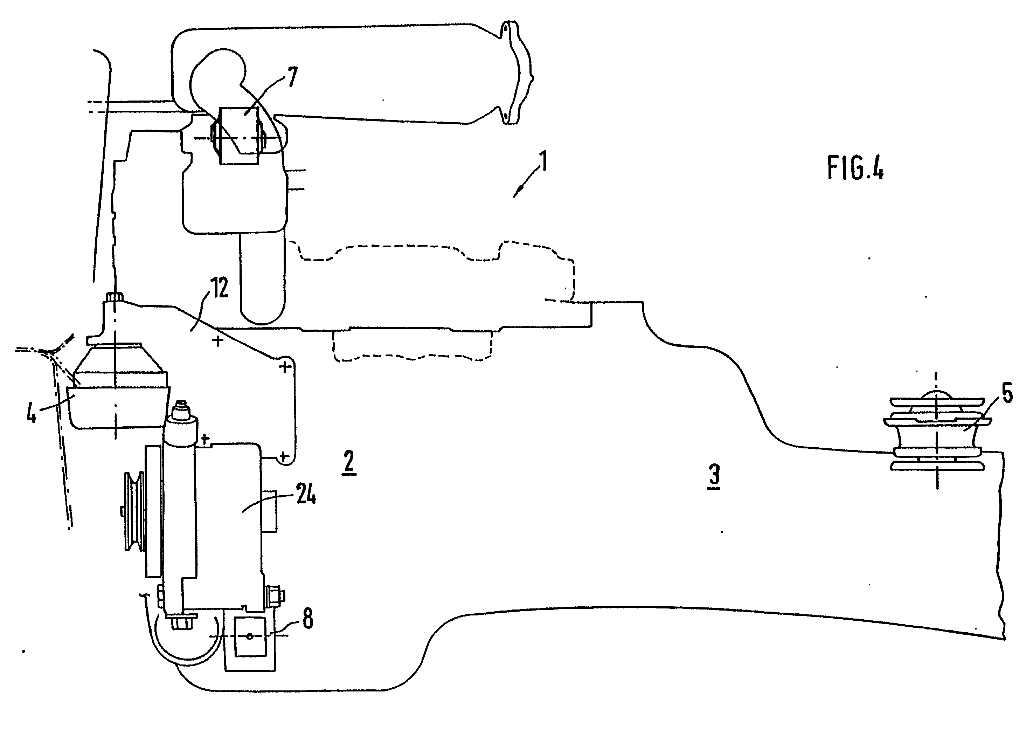

Fig. 4 eine Vorderansicht auf die Einheit mit Motor- und Getriebelager sowie Drehmomentstützen und

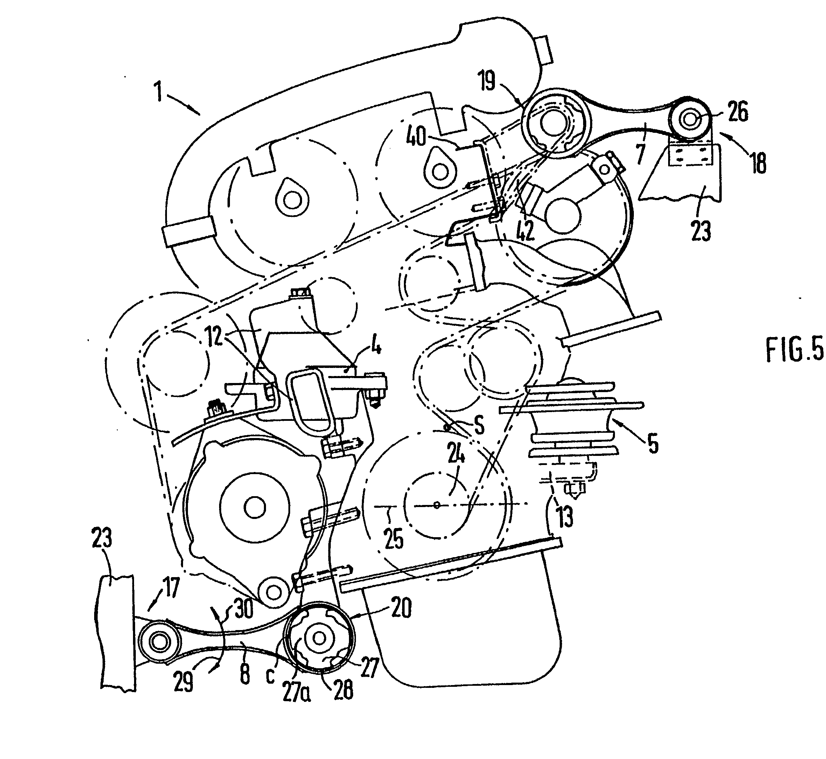

Fig. 5 eine Stirnansicht auf die Einheit in Pfeilrichtung X der Fig. 1 gesehen.

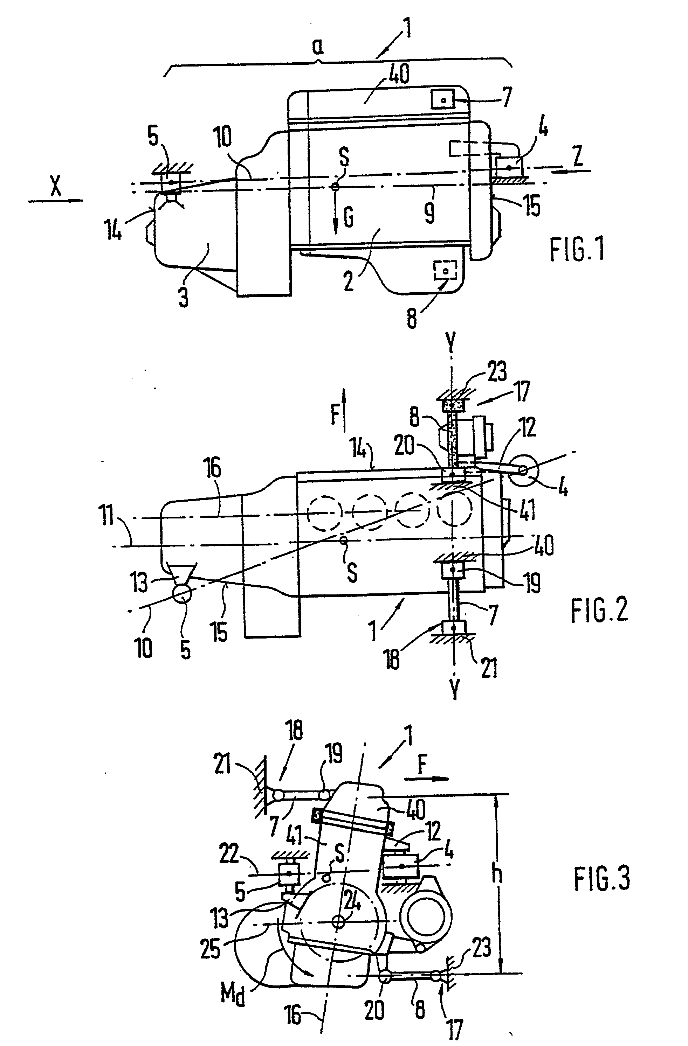

Wie aus den schematischen Darstellungen der Fig. 1 bis 3 zu erkennen ist, wird das Antriebsaggregat 1, das im wesentlichen aus einer Brennkraftmaschine 2 und einem Getriebe 3 besteht, über ein Motorlager 4 und einem Getriebelager 5 mit dem Fahrzeugaufbau verbunden und mittels zweier Drehmomentstützen 7 und 8 abgestützt.

Das Motorlager 4 sowie das Getriebelager 5 sind geringfügig oberhalb einer durch den Schwerpunkt S verlaufenden horizontalen Ebene 9 angeordnet (Fig. 1) wobei eine Verbindungslinie 10 zwischen diesen beiden Lagern 4 und 5 in der Draufsicht (Fig. 2) nahezu durch den Schwerpunkt S verläuft.

Die Lager 4 und 5 sind über kurze steife Tragarme 12, 13 möglichst nahe der Längsseiten 14, 15 und endseitig des Aggregats 1 gehalten um ein günstiges Schwingungsverhalten zu erzielen. Um Anregungen des Fahrzeugaufbaus zu vermeiden sind die Lager 4, 5 vorzugsweise in schwingungsgünstigen Bereichen des Aggregats 1 befestigt und eine Abstützung zum Fahrzeugaufbau erfolgt in relativ steifen Bereichen.

Das Motorlager 4 kann als Hydrolager und das Getriebelager 5 als Gummiflanschlager ausgeführt sein. Die Kennungen des konventionellen Flanschlagers sind in Hoch- und Querrichtung relativ hart und in Längsrichtung weniger hart ausgeführt, so daß das Lager 5 die Einheit 1 bei Kurvenfahrt in Lage hält. Dagegen ist das Motorlager 4 in allen Richtungen mit einer weicheren Kennung ausgeführt als das Getriebelager 5.

Die Lager 4 und 5 sind aufgrund der Lage ihrer Verbindungslinie 10 im Bereich des Schwerpunktes S in bezug auf die Kennung in Längs- Quer- und Hochrichtung definiert abstimmbar, ohne daß andere wesentliche Kriterien beeinflußt werden. Insbesondere wird das Hydrolager (Motorlager 4) zur Bedämpfung einer Rollbewegung des Aggregats 1 um das Getriebelager 5 mit herangezogen.

Die Drehmomentstützen 7 und 8 sind mit einem relativ großen Höhenabstand h zueinander oberhalb und unterhalb der horizontalen Schwerpunktebene 9 entfernt vom Getriebelager 5 auf der gegenüberliegenden Seite der Einheit 1 am Motorgehäuse angeordnet.

Zur Abstützung von Reaktionsmomenten der Brennkraftmaschine 2 erstrecken sich die beiden Drehmomentstützen 7 und 8 etwa horizontal zu beiden Seiten einer Zylinderlängsebene 16 und sind zum Fahrzeugaufbau in Lagern 18 und 17 und am Motorgehäuse in Lagern 19 und 20 gehalten.

Das Lager 19 der obenliegenden Drehmomentstütze 7 ist seitlich am Zylinderkopfdeckel 40 und das weitere Lager 20 der untenliegenden Drehmomentstütze 8 ist gegenüberliegend an einer Längsseite 14 des Motorgehäuses 41 angeordnet. Die Drehmomentstützen 7 und 8 verlaufen - in der Ansicht gemäß Fig. 3 - parallel zueinander, wobei die Drehmomentstütze 7 zwischen einer Aufbauwand 21 und dem Aggregat 1 oberhalb einer Lagerebene 22 des Motor- und Getriebelagers 4 und 5 liegt und die weitere Drehmomentstütze 8 zwischen einer Frontstirnwand 23 und dem Aggregat 1 unterhalb einer durch die Kurbelwelle 24 verlaufenden horizontalen Ebene 25 angeordnet ist. Die Drehmomentstützen 7 und 8 sind - gemäß Fig. 2 in Draufsicht gesehen - in einer gemeinsamen Motor- Querebene Y-Y zueinander gelagert.

Die aufbauseitige Befestigung für das Lager 18 der obenliegenden Drehmomentstütze 7 ist mit einem horizontal verlaufenden Einstellschlitz 26 versehen, der die Möglichkeit gibt, Toleranzen auszugleichen. Die Lager 19 und 20 der beiden Drehmomentstützen 7 und 8 enthalten ein vertikal ausgerichtetes Druckpolster 27 mit einem in Fahrzeugqeurrichtung wirkendem Anschlagteil 27a, welches so ausgebildet ist, daß zwischen diesem Anschlagteil 27a und der umgebenden Lagerschale 28 im Ruhezustand ein Freiraum (Abstand c) verbleibt. Dieser Freiraum zwischen Anschlagteil 27a und Lagerschale 28 dient zum Entkoppeln eines Leerlaufzitterns. Bei einer Abstützung eines Drehmoments liegt das Anschlagelement 27a an der Lagerschale 28 an. Durch das Druckpolster wird erreicht, daß eine niedrige Federsteifigkeit nach kleinen Schwingungen erhöht wird.

Die Drehmomentstützen 7 und 8 sind in den Lagern 17, 19 und 18, 20 gelenkig gelagert, das heißt, die Stützen 7 und 8 können sich in die Pfeilrichtungen 29, 30 pendelnd verschwenken, wobei die Lager 19 und 18 dann auf Verdrehung beansprucht werden.

## Patentansprüche

1. Lagerung für eine Motor-Getriebeeinheit eines Kraftfahrzeugs, die querliegend im Fahrzeug über ein Getriebelager und ein Motorlager sowie durch aufbauseitig gelagerte Drehmomentstützen gehalten ist, gekennzeichnet durch folgende Merkmale:

a) Das Motorlager (4) und das Getriebelager (5) sind derart an der Motor-Getriebeeinheit (1) gehalten, daß eine Verbindungslinie (10) etwa durch einen Schwerpunkt (S) der Einheit (1) verläuft.

b) Dem Getriebelager (5) gegenüberliegend sind am Motorgehäuse (41) eine erste Drehmomentstütze (8) und am Zylinderkopfdeckel (40) eine zweite Drehmomentstütze (7) gehalten.

c) Die Drehmomentstützen (7 und 8) sind mit einem Höhenabstand (h) versetzt zueinander angeordnet, wobei die erste Drehmomentstütze (8) unterhalb einer horizontalen Schwerpunktebene (9) und die zweite Drehmomentstütze (7) oberhalb dieser Ebene (9) liegt.

d) Die beiden Drehmomentstützen (7 und 8) sind in einer gemeinsamen senkrechten Motor- Querebene (Y–Y) gelagert und erstrecken sich zu beiden Seiten einer vertikalen in Fahrzeugquerrichtung verlaufenden Schwerpunktebene (11) und sind in horizontaler Anordnung zu Lagerorten (17 und 18) am Fahrzeugaufbau geführt.

2. Lagerung nach Anspruch 1, dadurch gekennzeichnet, daß die Motor-Getriebeeinheit (1) über die Lager der Drehmomentstützen (7, 8) am Fahrzeugaufbau und an der Einheit (1) in vertikaler Richtung frei ausschwingend gehalten ist und das Motorlager (4) und das Getriebelager (5) diese Ausschwingungen bedämpfende Kennungen aufweisen.

3. Lagerung nach den Ansprüchen 1 oder 2, dadurch gekennzeichnet, daß die Drehmomentstütze (7) oberhalb einer Lagerebene (22) durch das Motor- und Getriebelager (4, 5) zwischen einer Aufbauwand (21) und einer Längsseite des Zylinderkopfdeckels (40) angeordnet ist und daß die weitere Drehmomentstütze (8) zwischen einer Frontstirnwand (23) und einer Längsseite des Motorgehäuses (41) unterhalb einer durch eine Kurbelwelle (24) verlaufenden horizontalen Ebene (25) angeordnet ist.

4. Lagerung nach Anspruch 3, dadurch gekennzeichnet, daß die Drehmomentstütze (7) über einen mit dem Zylinderkopfdeckel (40) verbundenen Tragarm (42) an der Einheit (1) gehalten ist.

5. Lagerung nach den Ansprüchen 1, 2 oder 3, dadurch gekennzeichnet, daß die beiden Drehmomentstützen (7 und 8) - in Vorderansicht gesehen - parallel zueinander liegend angeordnet sind (Fig. 3).

6. Lagerung nach einem oder mehreren der vorhergehenden Ansprüche, dadurch gekennzeichnet, daß die Lager (4, 5) der Einheit (1) eine relativ große Stützbasis (a) zueinander aufweisen und unmittelbar benachbart an Längsseiten (14, 15) des Getriebe- und Motorgehäuses angeordnet sind.

7. Lagerung nach einem oder mehreren der vorhergehenden Ansprüche, dadurch gekennzeichnet, daß das Motorlager (4) als Hydrolager mit einer in einer Längs-, Quer- und Hochrichtung weicheren Kennung ausgeführt ist als ein als Gummiflanschlager ausgebildetes Getriebelager (5).

8. Lagerung nach einem oder mehreren der vorhergehenden Ansprüche, dadurch gekennzeichnet, daß das am Fahrzeugaufbau (23) gehaltene Lager der obenliegenden Drehmomentstütze (7) einen horizontalen Einstellschlitz (26) aufweist.

9. Lagerung nach einem oder mehreren der vorhergehenden Ansprüche, dadurch gekennzeichnet, daß die beiden Drehmomentstützen (7 und 8) am Motorgehäuse (41) jeweils über ein Lager (19, 20) abgestützt sind, die ein vertikal ausgerichtetes Druckpolster (27) und ein in Fahrzeugquerrichtung wirkendes Anschlagteil (27a) enthalten.

10. Lagerung nach Anspruch 8, dadurch gekennzeichnet, daß die Lager (19, 20) in horizontaler Richtung im Bereich von kleinen Ausschwingwegen zur Aufnahme eines Leerlaufzitterns eine relativ weiche Kennung aufweisen.

## Claims

1. A mounting for a motor vehicle engine and gearbox unit mounted transversely in the vehicle by way of a gearbox bearing, an engine bearing and torsion bars mounted on the vehicle bodywork, charcterised by the following features:
a) The engine bearing (4) and the gearbox bearing (5) are so mounted on the engine and gearbox unit (1) that a line (10) interconnecting the two bearings passes substantially through a centre of gravity (S) of the unit (1);
b) Opposite the gearbox bearing (5) a first torsion bar (8) is mounted on the engine casing (41) and a second torsion bar (7) is mounted on the cylinder head cover (40);
c) The torsion bars (7, 8) are disposed relatively to one another with a vertical offset (h), the first torsion bar (8) being disposed below a horizontal plane (9) passing through the centre of gravity while the second torsion bar (7) is disposed above the latter plane;
d) The two torsion bars (7, 8) are mounted in a common vertical transverse plane (Y–Y) through the engine, extend on both sides of a vertical centre-of-gravity plane (11) extending transversely of the vehicle and extend in a horizontal arrangement to bearing places (17, 18) on the vehicle body.

2. A mounting according to claim 1, characterised in that the engine and gearbox unit (1) is so mounted by way of the torsion bar bearing on the vehicle body and on the unit (1) as to be free to swing out vertically and the engine bearing (4) and gearbox bearing (5) have characteristics damping such swinging-out.

3. A mounting according to claim 1 or 2, characterised in that the torsion bar (7) is disposed above a bearing plane (22) extending through the engine and gearbox bearings (4, 5) respectively between a vehicle body wall (21) and a long side of the cylinder head cover (40) and the second torsion bar (8) is disposed between a front end wall (23) and a long side of the engine casing (41) below a horizontal plane (25) which extends through a crankshaft (24).

4. A mounting according to claim 3, characterised in that the torsion bar (7) is mounted on the unit (1) with the interposition of a carrying arm (42) connected to the cylinder head cover (40).

5. A mounting according to claim 1 or 2 or 3, characterised in that the two torsion bars (7, 8) are, as seen in front elevation, disposed horizontally and parallel to one another (Fig. 3).

6. A mounting according to one or more of the previous claims, characterised in that the bearings (4, 5) of the unit (1) have a relatively substantial support base (a) relatively to one another and are disposed immediately adjacent long sides (14, 15) of the gearbox and egine casing.

7. A mounting according to one or more of the previous claims, characterised in that the engine bearing (4) is a hydraulic bearing having longitudinally, transversely and vertically a softer characteristic than a rubber flange bearing type gearbox bearing (5).

8. A mounting according to one or more of the previous claims, characterised in that the top torsion bar bearing mounted on the vehicle body (23) is formed with a horizontal adjusting slot (26).

9. A mounting according to one or more of the previous claims, characterised in that the two torsion bars (7, 8) bear on the engine casing (41) by way of a respective bearing (19, 20) comprising a vertically aligned pressure pad (27) and an abutment member (27a) operative transversely of the vehicle.

10. A mounting according to claim 8, characterised in that the bearings (19, 20) have a relatively soft horizontal characteristic for reduced outward deflections in order to take up idling flutter.

## Revendications

1. Dispositif de support d'un groupe moteur-boîte de vitesses de véhicule automobile qui, placé transversalement dans le véhicule, est tenu par l'intermédiaire d'un support de boîte de vitesse et d'un support de moteur et par des barres de couple montés côté caisse, caractérisé par les caractéristiques suivantes:
a) Le support de moteur (4) et le support de boîte de vitesses (5) sont montés sur e groupe moteur-boîte de vitesses (1) de façon telle que la ligne (10) qui les joint passe à peu près par le centre de gravité (S) du groupe (1).
b) A l'opposé du support de boîte de vitesse (5) sont montés, sur la carcasse (41) du moteur, une première barre de couple (8) et, sur le couvre-culasse (40), une deuxième barre de couple (7).
c) Les barres de couple (7 et 8) sont placées à une certaine distance verticale (h) l'une de l'autre, la première (8) étant située au-dessous du plan horizontal (9) passant par le centre de gravité et la deuxième (7) située au-dessus de ce plan (9).
d) Les deux barres de couple (7 et 8) sont montées dans un plan transversale vertical commun (Y–Y) du moteur, s'étendent de part et d'autre du plan transversal vertical (11) du véhicule qui passe par le centre de gravité, et aboutissent horizontalement à des points de support (17 et 18) prévus sur la caisse du véhicule.

2. Dispositif de support selon la revendication 1, caractérisé par le fait que le groupe moteur-boîte de vitesse (1) est monté oscillant librement en direction verticale par l'intermédiaire du support des barres de couple (7, 8) sur la caisse du véhicule et sur le groupe (1) et le support de moteur (4) et le support de boîte de vitesses (5) ont des caractéristiques qui amortissent ces oscillations.

3. Dispositif de support selon l'une des revendications 1 et 2, caractérisé par le fait qu'une barre de couple (7) est placée au-dessus du plan (22) passant par les supports de moteur et de boîte de vitesses (4, 5) entre une paroi (21) de la caisse et un côté longitudinal du couvre-culasse (40) et que l'autre barre de couple (8) est placée entre une paroi frontale (23) de l'avant et un côté longitudinal de la caracasse (41) du moteur au-dessous du plan horizontal (25) passant par le vilebrequin (24).

4. Dispositif de support selon la revendication 3, caractérisé par le fait qu'une barre de couple (7) est montée sur le groupe (1) par l'intermédiaire d'un bras support (42) joint au couvre-culasse (40).

5. Dispositif de support selon l'une des revendications 1 à 3, caractérisé par le fait que les deux barres de couple (7 et 8), vues de face, sont parallèles (fig. 3).

6. Dispositif de support selon une ou plusieurs des revendications précédentes, caractérisé par le fait que les supports (4, 5) du groupe (1) présentent une base de support (a) relativement grande et sont placés à proximité immédiate de côtés longitudinaux (14, 15) de la caracasse du moteur et du carter de la boîte de vitesses.

7. Dispositif de support selon une ou plusieurs des revendications précédentes, caractérisé par le fait que le support de moteur (4) est un support hydraulique qui a une caractéristique plus douce en directions longitudinale, transversale et verticale qu'un support de boîte de vitesses (5) du type à brides en caoutchouc.

8. Dispositif de support selon une ou plusieurs des revendications précédentes, caractérisé par le fait que le support, monté sur la caisse du véhicule, de la barre de couple du haut (7) présente une fente horizontale de réglage (26).

9. Dispositif de support selon une ou plusieurs des revendications précédentes, caractérisé par le fait que les deux barres de couple (7 et 8) sont montées sur la carcasse (41) du moteur chacune par l'intermédiaire d'un support (19, 20) qui contient un coussin de pression orienté verticalement (27) et un élément de butée (27a) agissant dans la direction transversale du véhicule.

10. Dispositif de support selon la revendication 8, caractérisé par le fait que les supports (19, 20) ont en direction horizontale, dans le domaine des petites courses d'oscillation, une caractéristique relativement douce pour l'absorption du tremblement au ralenti.

FIG.1

FIG.2

FIG.3

7

1

FIG.4

12

4

+

+

2

24

+

3

5

8

EP 0 332 861 B1

FIG.5